# EUROPÄISCHE PATENTSCHRIFT

(11) **EP 3 986 777 B1**
(45) Veröffentlichungstag und Bekanntmachung des Hinweises auf die Patenterteilung: **17.07.2024**
(21) Anmeldenummer: 20730566.5
(22) Anmeldetag: 14.05.2020
(51) Int. Cl.: B62L 3/02, F16D 53/00, F16D 55/00, B60T 1/06

(54) **RADMODUL FÜR EIN FAHRZEUG UND FAHRZEUG MIT DEM RADMODUL**
WHEEL MODULE FOR A VEHICLE, VEHICLE WITH SAID WHEEL MODULE
MODULE DE ROUE POUR VÉHICULE, VÉHICULE AVEC CE MODULE DE ROUE

(30) Priorität: 18.06.2019 DE 102019116425
(43) Veröffentlichungstag der Anmeldung: 27.04.2022
(73) Patentinhaber: Schaeffler Technologies AG & Co. KG, 91074 Herzogenaurach (DE)
(72) Erfinder: ROCQUET, Stephane, 45640 Sandillon (FR); GALANT, Alexis, 45770 Saran (FR); DURR, Julien, 45400 Fleury les aubrais (FR); ORTMANN, Simon, 76532 Baden-Baden (DE)
(86) Internationale Anmeldenummer: PCT/DE2020/100417
(87) Internationale Veröffentlichungsnummer: WO 2020/253903

(56) Entgegenhaltungen:
- DE-U1- 20 016 878
- US-A1- 2002 038 742

## Beschreibung

Die Erfindung betrifft ein Radmodul für ein Fahrzeug, insbesondere für einen Elektroroller oder Elektroscooter. Das Radmodul umfasst eine Radachse und ein Rad mit einer Radfelge, wobei die Radfelge auf der Radachse drehbar gelagert ist. Das Radmodul umfasst eine Bremsvorrichtung mit einem Bremsbelag und eine Bremsscheibe zum Zusammenwirken mit dem Bremsbelag. Die Erfindung betrifft auch ein Fahrzeug mit dem Radmodul und ein Verfahren zum Abbremsen eines rotierenden Rads eines Radmoduls.

Bei zweirädrigen Fahrzeugen wie Tretrollern oder Scootern oder auch bei Fahrrädern kommen oftmals Scheibenbremsen zum Einsatz, um das Fahrzeug sicher abzubremsen.

Beispielsweise beschreibt die Druckschrift DE 200 16 878 U1 einen Tretroller mit einer Bremseinrichtung, die als eine hydraulisch aktivierbare Scheibenbremse ausgebildet ist. Die Bremseinrichtung weist einen Bremssattel auf, der am Fahrzeugrahmen befestigt ist, die Bremsscheibe umgreift und bei Betätigung gegen die Bremsscheibe gedrückt wird. Aus der US 2002/038742 A1 ist ein Radmodul nach dem Oberbegriff des Anspruchs 1 für ein Produktionsfahrzeug offenbart.

Der Erfindung liegt die Aufgabe zugrunde, eine bauraumsparende und an eine Radgröße eines Rads eines Radmoduls angepasste Bremsvorrichtung bereitzustellen. Diese Aufgabe wird durch ein Radmodul für ein Fahrzeug mit den Merkmalen des Anspruchs 1, durch ein Fahrzeug mit dem Radmodul gemäß dem Anspruch 7 gelöst. Bevorzugte oder vorteilhafte Ausführungsformen der Erfindung ergeben sich aus den Unteransprüchen, der nachfolgenden Beschreibung und/oder den beigefügten Figuren.

Es wird ein Radmodul für ein Fahrzeug vorgeschlagen. Vorzugsweise weist das Fahrzeug ein oder mehr Radmodule auf.

Bevorzugt ist das Fahrzeug als ein Klein- oder Kleinstfahrzeug oder als ein Elektromobil ausgebildet. Das Fahrzeug weist vorzugsweise mindestens ein Radmodul und/oder Rad auf. Mit nur einem Radmodul und/oder Rad kann das Fahrzeug als ein elektrisches Einrad, z.B. als ein sogenanntes Monowheel oder Solowheel ausgebildet sein. Mit zwei oder mehr Radmodulen und/oder Rädern ist das Fahrzeug bevorzugt als ein Roller, insbesondere als ein Elektromotorrad, als ein Elektromotorroller, als ein Elektroroller, Elektrotretroller, Elektroscooter, z.B. E-Scooter, als ein Segway, Hoverboard, Kickboard, Skateboard, Longboard o.ä. ausgebildet. Alternativ kann das Fahrzeug als ein Fahrrad, insbesondere als ein Elektrofahrrad, z.B. als ein Pedelec oder als ein E-Bike ausgebildet sein. Das Fahrzeug kann alternativ als ein mehrspuriges Fahrrad, insbesondere mit drei oder mehr Rädern ausgebildet sein. Beispielsweise kann das Fahrzeug ein Transport- oder Lastenrad, insbesondere ein motorisiertes bzw. elektrisch angetriebenes Transport- oder Lastenrad, im Speziellen ein Dreirad- oder Vierrad-Pedelec oder eine Rikscha, insbesondere mit oder ohne Dach, oder ein Kabinenroller sein.

Das Radmodul weist eine Radachse und ein Rad auf. Besonders bevorzugt ist, dass das Rad ein Vorderrad des Fahrzeugs bildet. Das Rad umfasst eine Radfelge und bevorzugt einen Reifen, wobei der Reifen auf der Radfelge angeordnet ist. Die Radfelge ist auf der Radachse drehbar gelagert. Vorzugsweise ist hierfür mindestens eine Wälzlagereinrichtung, vorzugsweise zwei Wälzlagereinrichtungen, vorgesehen. In dem Rad kann eine Antriebseinrichtung, insbesondere ein Elektromotor, zum Antrieb des Rads integriert sein.

Das Radmodul umfasst eine Bremsvorrichtung für das Rad. Die Bremsvorrichtung weist einen Bremsbelag und eine Bremsscheibe zum Zusammenwirken mit dem Bremsbelag auf.

Erfindungsgemäß ist die Bremsscheibe zum Abbremsen des Rads, insbesondere zum Zusammenwirken mit dem Bremsbelag, axial und/oder entlang der Radachse bewegbar und/oder verschiebbar.

In einer bevorzugten Ausgestaltung der Erfindung umfasst die Bremsvorrichtung eine Hydraulikeinrichtung zum Erzeugen einer kinematischen Energie als Bremskraft.

Vorzugsweise umfasst die Hydraulikeinrichtung eine Hydraulikkammer in die ein Fluid einleitbar ist und einen Hubkolben, der in der Hydraulikkammer mindestens einen Hub ausführen kann. Beispielsweise ist die Hydraulikkammer in einer seitlichen Draufsicht ringförmig ausgebildet. Insbesondere ist der Hubkolben als ein Ringkolben ausgebildet.

Besonders bevorzugt ist es im Rahmen der Erfindung, dass die Hydraulikeinrichtung an der Radachse befestigt ist. Insbesondere ist die Hydraulikeinrichtung konzentrisch mit der Radfelge auf der Radachse angeordnet. Im Speziellen ist die Hydraulikeinrichtung auf einer Seite der Radfelge angeordnet. Vorteilhaft ist, dass die beim Abbremsen des rotierenden Rads erzeugten Auslösekräfte dadurch auf die Radachse abgeleitet werden können.

Zur Befestigung an der Radachse kann die Bremsvorrichtung eine Befestigungsstruktur für die Hydraulikeinrichtung umfassen. Vorzugsweise ist die Befestigungsstruktur kraftschlüssig, z.B. über eine Übermaßpassung, an der Radachse befestigt. Alternativ kann die Befestigungsstruktur auch form- oder stoffschlüssig mit der Radachse verbunden sein. Bevorzugt ist die Hydraulikkammer und optional ergänzend ein Strömungskanal der Hydraulikeinrichtung, durch den das Fluid in die Hydraulikkammer einleitbar ist, an der Befestigungsstruktur angeordnet und/oder in diese integriert.

In einer möglichen konstruktiven Umsetzung der Erfindung ist die Bremsscheibe zwischen dem Hubkolben und dem Bremsbelag angeordnet. Vorzugsweise steht die Bremsscheibe mit dem Hubkolben in einer Wirkverbindung. Insbesondere ist die Bremsscheibe durch den Hub des Ringkolbens axial verschiebbar und dadurch an den Bremsbelag anlegbar und/oder anpressbar. Hierbei wird eine kinetische Energie des Hubkolbens in Bremskraft zum Abbremsen des rotierenden Rades gewandelt. Wenn die Bremsscheibe an den Bremsbelag angelegt und/oder angepresst ist, kann sie das rotierende Rad durch die erzeugte Reibung abbremsen. Insbesondere ist die Bremsvorrichtung als eine Reibbremse ausgebildet.

Vorzugsweise kann die Bremsscheibe axial in ihre Ausgangsstellung zurückbewegt und/oder zurückverschoben werden. Insbesondere umfasst die Bremsvorrichtung hierzu mindestens eine, bevorzugt mehrere Federeinrichtungen. Beispielsweise sind die Federeinrichtungen als Schraubenfedern, insbesondere als Rückstellfedern, zur Erzeugung einer Rückstellkraft ausgebildet. Insbesondere ist die Bremsscheibe mit der Rückstellkraft beaufschlagbar und dadurch in die Ausgangsstellung zurückbewegbar.

In einer weiteren möglichen Ausführungsform der Erfindung umfasst das Radmodul ein Gehäuse für die Bremsvorrichtung. Das Gehäuse ist z.B. aus einem Kunststoffmaterial oder aus einer Aluminiumlegierung gebildet. Es ist in einer Draufsicht von der Seite ringförmig ausgebildet und weist eine zentrale Aussparung für die Radachse auf.

Es ist im Rahmen der Erfindung bevorzugt, dass das Gehäuse die Bremsvorrichtung zumindest teilweise in sich aufnimmt. Vorzugsweise ist das Gehäuse mit der Befestigungsstruktur für die Hydraulikeinrichtung verbunden und/oder das Gehäuse nimmt diese in sich zumindest abschnittsweise auf. Optional kann das Gehäuse einen integralen Bestandteil der Befestigungsstruktur bilden.

In einer weiteren bevorzugten Ausbildung der Erfindung verblendet das Gehäuse die Bremsvorrichtung und/oder die Radfelge größtenteils oder vollständig nach außen. Im Speziellen bildet das Gehäuse eine Sichtseite, die aufgrund ihres Materials z.B. durch ein Umformverfahren und/oder Spritzgussverfahren kostengünstig optisch ansprechbar designt werden kann. In einer Draufsicht von einer Seite auf das Rad des Radmoduls sind bevorzugt nur die Sichtseite, ein radialer Abschnitt der Radfelge und/oder der darauf sitzende Reifen sichtbar. Somit kann die Bremsvorrichtung unauffällig und optisch ansprechend in das Radmodul integriert werden.

In einer möglichen Ausführungsform der Erfindung ist der Bremsbelag an der Radfelge angeordnet. Insbesondere bedeckt der Bremsbelag zumindest abschnittsweise eine Außenseite der Radfelge. Möglich ist im Rahmen der Erfindung auch, dass der Bremsbelag in mehreren Abschnitten auf der Radfelge angeordnet ist. Bevorzugt rotiert der Bremsbelag mit und/oder auf der Radfelge.

Vorteilhaft ist, dass durch die Anordnung des Bremsbelags auf der Radfelge eine bauraumsparende Ausgestaltung der Bremsvorrichtung gewährleistet werden kann. Es kann eine Bauteileanzahl reduziert und ein schlanker Aufbau der Bremsvorrichtung erreicht werden. Insbesondere baut die Bremsvorrichtung nicht nach außen auf, so wie es z.B. bei gewöhnlichen Bremsbacken einer Scheibenbremse der Fall ist. Es ist weiterhin von Vorteil, dass die Bremsvorrichtung an eine Größe des Rades, insbesondere an eine Größe der Radfelge, angepasst werden kann.

In einer bevorzugten Ausführungsform der Erfindung ist der Bremsbelag ringförmig ausgebildet. Vorzugsweise ist der Bremsbelag radial zu der Radachse angeordnet. Alternativ oder optional ergänzend ist der Bremsbelag so an der Radfelge angeordnet, dass er mit dieser konzentrisch ist. Möglich ist im Rahmen der Erfindung auch, dass der Bremsbelag in mehreren konzentrischen Kreisen auf der Radfelge angeordnet ist. Alternativ zu der ringförmigen Ausgestaltung kann der Bremsbelag auch flächig, insbesondere als eine oder mehrere Flächenabschnitte auf der Radfelge aufgebracht sein, wobei der oder die Flächenabschnitte bevorzugt zum Zusammenwirken mit der Bremsscheibe geeignete Formen und/oder Konturen aufweisen.

In einer möglichen konstruktiven Umsetzung der Erfindung ist der Bremsbelag unmittelbar auf die Radfelge aufgebracht. Vorzugsweise ist der Bremsbelag stoffschlüssig mit der Radfelge verbunden. Beispielsweise ist er mit der Radfelge verklebt oder in die Radfelge integriert.

Alternativ ist es im Rahmen der Erfindung möglich, dass das Radmodul einen Bremsbelagträger aufweist, der den Bremsbelag trägt. Insbesondere ist der Bremsbelagträger an der Radfelge angeordnet, beispielsweise über Befestigungsmittel wie Schrauben, Niete oder ähnliches an der Radfelge befestigt. Zum Beispiel ist der Bremsbelagträger als ein Ring, insbesondere als ein Blechring, ausgebildet. Vorzugsweise ist der Bremsbelagträger radial zu der Radachse angeordnet. Alternativ oder optional ergänzend ist der Bremsbelagträger so an der Radfelge angeordnet, dass er konzentrisch mit dieser ist.

Der Bremsbelag weist vorzugsweise die Funktion einer thermischen Isolationseinrichtung auf. Insbesondere schützt der Bremsbelag das Rad vor einer Einwirkung von Abwärme der Bremsvorrichtung. Vorzugsweise ist der Bremsbelag hierzu aus einem thermisch isolierenden Material gebildet. Vorteilhaft ist, dass Hitze, die bei dem Abbremsen des rotierenden Rads entsteht, von der Radfelge und/oder von der in dem Rad integrierten Antriebseinrichtung zumindest teilweise abgehalten werden kann. Insbesondere kann dadurch eine Schädigung des Rads durch Überhitzung und/oder ein durch die Hitze verursachter Funktionsausfall der Antriebseinrichtung vermieden werden.

Eine mögliche Weiterbildung der Erfindung sieht vor, dass die Radfelge und/oder der Bremsbelagträger mindestens eine Verdrehsicherung für die Befestigungsmittel umfasst, mit der der Bremsbelagträger an der Radfelge befestigt ist. Die mindestens eine Verdrehsicherung kann z.B. als eine sich axial erstreckende Vertiefung in der Radfelge oder in dem Bremsbelagträger ausgebildet sein.

Einen weiteren Gegenstand der Erfindung bildet ein Fahrzeug mit mindestens einem Radmodul nach der bisherigen Beschreibung und/oder nach einem der Ansprüche 1 bis 9. Vorzugsweise ist das Fahrzeug als ein Zweirad, z.B. als ein Elektrotretroller, als ein Elektroscooter oder als ein Elektrofahrrad ausgebildet.

In einer bevorzugten Ausführungsform umfasst das Fahrzeug einen Fahrzeugrahmen mit einer Radgabel. Vorzugsweise trägt die Radgabel das Radmodul. Insbesondere ist die Radachse hierfür zusammen mit dem darauf drehbar gelagerten Rad auf der Radgabel angeordnet. Beispielsweise ist die Radgabel mit einem Lenker des Fahrzeugs verbunden, sodass das Radmodul und somit das Fahrzeug gelenkt werden kann.

Einen weiteren Gegenstand der Erfindung bildet ein Verfahren zum Abbremsen eines rotierenden Rads eines Radmoduls mit einer Bremsvorrichtung des Radmoduls nach der bisherigen Beschreibung und/oder nach einem der Ansprüche 1 bis 8. Im Rahmen des Verfahrens wird die Bremsscheibe zum Abbremsen des rotierenden Rades axial verschoben und an den bevorzugt an der Radfelge angeordneten Bremsbelag angelegt und/oder angepresst.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: ein Fahrzeug mit einem Radmodul, wobei das Fahrzeug als ein Elektroscooter oder als ein Elektroroller ausgebildet ist;
- Figur 2: das Radmodul aus der Figur 1 mit einer Bremsvorrichtung zum Abbremsen eines rotierenden Rads des Radmoduls;
- Figur 3: das Radmodul ohne die Bremsvorrichtung;
- Figur 4: eine axiale Schnittansicht des Radmoduls aus der Figur 2;
- Figur 5: eine axiale Schnittansicht des Radmoduls ohne die Bremsvorrichtung gemäß der Figur 3;
- Figur 6: ein Ausschnitt aus einer Radfelge des Rads.

Einander entsprechende oder gleiche Teile sind in den Figuren jeweils mit den gleichen Bezugszeichen versehen.

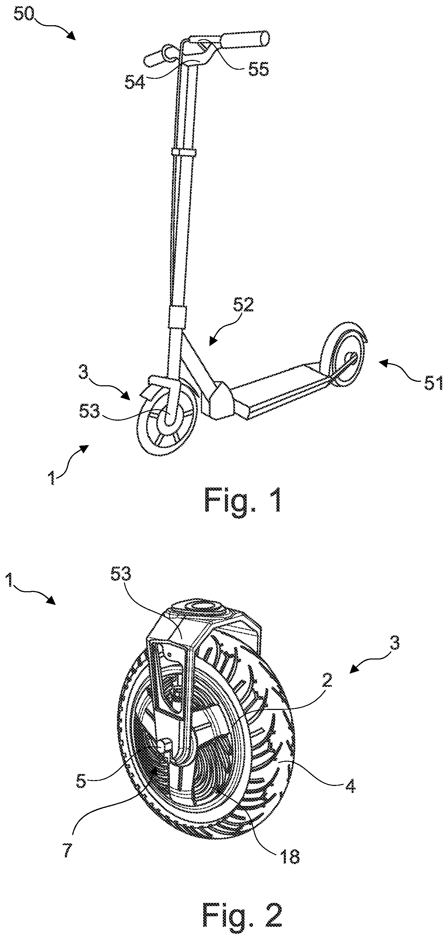

In der Figur 1 ist ein Fahrzeug 50 mit einem Radmodul 1 gezeigt. Das Fahrzeug 50 ist als ein Elektroroller oder Elektroscooter ausgebildet. Das Radmodul 1 weist ein Rad 3 auf, wobei das Rad 3 in dem Fahrzeug 50 ein Vorderrad ist. Das Fahrzeug 50 weist auch ein Hinterrad 51 auf. Das Radmodul und das Hinterrad sind an einem Fahrzeugrahmen 52 des Fahrzeugs 50 angeordnet. Das Radmodul 1 ist über eine Radgabel 53 an dem Fahrzeugrahmen 52, insbesondere an einem Lenker 54 des Fahrzeugs 50, drehbar befestigt, sodass das Fahrzeug 50 über das Radmodul 1 gelenkt werden kann.

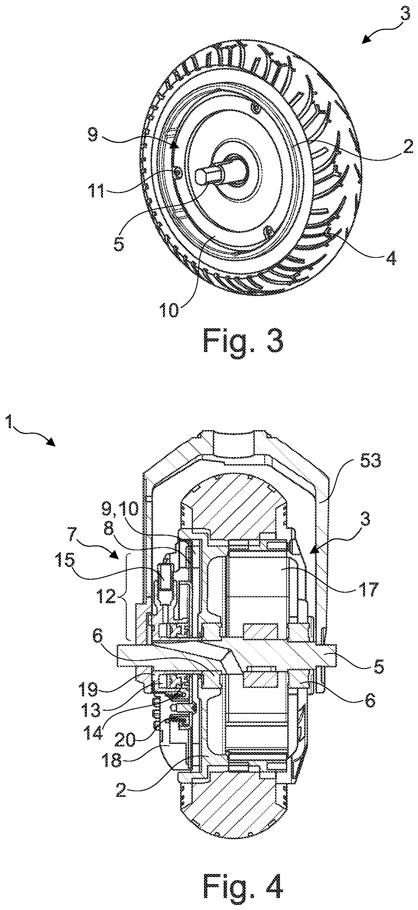

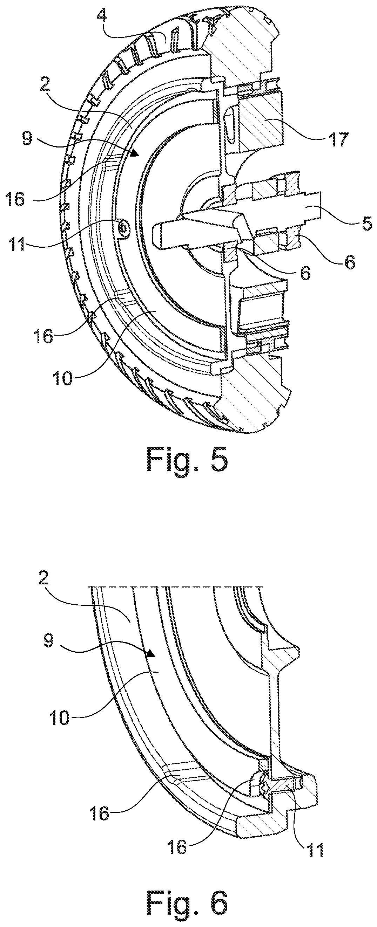

Gemäß der Figur 2, in der das Radmodul 1 in einer perspektivischen seitlichen Draufsicht gezeigt ist, weist das Rad 3 des Radmoduls 1 eine Radfelge 2 und einen Reifen 4 auf, wobei der Reifen 4 auf der Radfelge 2 angeordnet ist. Das Radmodul 1 umfasst eine Radachse 5, auf der die Radfelge 2 drehbar gelagert ist. Zur Lagerung der Radfelge 2 auf der Radachse 5 sind, wie aus den Figuren 4 und 5 zu entnehmen, zwei Wälzlagereinrichtungen 6 vorgesehen. In der Radfelge 2 ist eine Antriebseinrichtung 17 (Fig. 4, 5), z.B. ein Elektromotor, zum Antrieb des Rads 3 integriert.

Das Radmodul 1 weist eine Bremsvorrichtung 7 für das rotierende Rad 3 auf. Die Bremsvorrichtung 7 ist als eine Reibbremse ausgebildet. Sie ist benachbart zu der Radfelge 2 und/oder auf einer Seite der Radfelge 2 auf der Radachse 5 angeordnet.

Wie aus der Figur 4, die einen axialen Querschnitt des Radmoduls auf der Figur 2 zeigt, zu entnehmen, weist die Bremsvorrichtung 7 zum Abbremsen des rotierenden Rads 3 eine Bremsscheibe 8 auf. Die Bremsscheibe 8 ist konzentrisch mit der Radfelge 2 auf der Radachse 5 angeordnet. Sie ist axial bewegbar, insbesondere zu der Radfelge 2 hin verschiebbar.

In der Figur 3 ist das Rad 3 in einer perspektivischen Ansicht von der Seite dargestellt. Wie daraus ersichtlich, umfasst die Bremsvorrichtung 7 einen Bremsbelag 9, der mit der Bremsscheibe 8 (Fig. 4) zusammenwirken kann, um das rotierende Rad 3 durch Reibung zwischen der Bremsscheibe 8 und dem Bremsbelag 9 abzubremsen.

Der Bremsbelag 9 ist ringförmig ausgebildet und auf die Radfelge 2 aufgebracht. Der Bremsbelag 9 bedeckt und/oder bildet somit einen Bereich einer Außenseite der Radfelge 2. Der Bremsbelag 9 ist so auf der Radfelge 2 angeordnet, dass er konzentrisch mit der Radfelge 2 ist. In einem möglichen nicht gezeigten Ausführungsbeispiel kann der Bremsbelag 9 unmittelbar auf die Radfelge 2 aufgebracht sein, insbesondere stoffschlüssig mit dieser verbunden sein, zum Beispiel auf diese aufgeklebt sein.

In einem alternativen Ausführungsbeispiel gemäß der Figuren 3 bis 5 umfasst das Radmodul 1 einen Bremsbelagträger 10 zum Tragen des Bremsbelags 9. Der Bremsbelagträger 10 ist ringförmig, z.B. als ein Blechring, ausgebildet und an der Radfelge 2 über Befestigungsmittel 11, insbesondere über mehrere Schrauben, befestigt. Der Bremsbelagträger 10 ist so an der Radfelge 2 angeordnet, dass er radial zu der Radachse 5 und konzentrisch mit der Radfelge 2 ist. Der Bremsbelag 9 ist auf den Bremsbelagträger 10 aufgebracht.

Die Figur 5 zeigt einen axialen Querschnitt durch das Rad 3 und die Figur 6 einen Ausschnitt der Radfelge 2 in einem axialen Querschnitt. In die Radfelge 2 und in den Bremsbelagträger 10 sind Verdrehsicherungen 16 (Fig. 5, 6) in Form von sich axial erstreckenden Vertiefungen für die Befestigungsmittel 11 angeordnet. Die Verdrehsicherungen 16 können vermeiden, dass sich die Befestigungsmittel 11 durch die Rotation des Rads 3 ungewollt lösen und verhindern dadurch ein Abfallen des Bremsbelagträgers 10 von der Radfelge 2.

Dadurch dass der Bremsbelag 9 und/oder der Bremsbelagträger 10 an der Radfelge 2 angeordnet ist, dass kann die Bremsvorrichtung 7 in vorteilhafter Weise besonders bauraumsparend und besonders schlank und schmal ausgebildet werden. Die Bremsvorrichtung 7 kann aufgrund der konzentrischen Anordnung der Hydraulikeinrichtung 12, der Bremsscheibe 8 und der Radfelge 2 an eine Größe des Rades, insbesondere an eine Größe der Radfelge, angepasst werden.

Gemäß der Figur 4 umfasst die Bremsvorrichtung 7 eine Hydraulikeinrichtung 12 zur Erzeugung der Bremskraft durch kinematische Energie. Die Hydraulikeinrichtung 12 ist an der Radachse 5 befestigt. Sie weist eine in einer seitlichen Draufsicht ringförmige Hydraulikkammer 13 und einen Ringkolben 14 auf, der in der Hydraulikkammer 13 einen Hub ausführen kann. Die Hydraulikeinrichtung 12 umfasst auch einen Strömungskanal 15, durch den ein Fluid in die Hydraulikkammer 13 eingeleitet werden kann, um den Ringkolben 14 zur Ausführung des Hubs zu veranlassen.

Die Hydraulikkammer 13 und der Ringkolben 14 sind konzentrisch mit der Radfelge 2 angeordnet. Zur Befestigung der Hydraulikeinrichtung 12 an der Radachse 5 weist die Bremsvorrichtung 7 eine Befestigungsstruktur 19 auf. Die Befestigungsstruktur 19 ist an der Radachse 5 kraftschlüssig, insbesondere durch eine Presspassung, festgelegt. Die Hydraulikkammer 13 und der Strömungskanal 15 sind an der Befestigungsstruktur 19 befestigt. Sie können aber auch einen integralen Bestandteil der Befestigungsstruktur 19 bilden. Vorteilhaft ist, dass die beim Abbremsen des rotierenden Rads 3 erzeugten Auslösekräfte durch die Befestigung der Hydraulikeinrichtung 13 an der Radachse 5 auf diese abgeleitet werden können.

Zur Aktivierung der Hydraulikeinrichtung 12 weist das Fahrzeug 50 eine Betätigungseinrichtung 55, zum Beispiel einen Handhebel, auf (siehe Fig. 1). Bei Betätigung der Betätigungseinrichtung 55 wird das Fluid in die Hydraulikkammer 13 geleitet, sodass der Ringkolben 14 den Hub in der Hydraulikkammer 13 ausführt. Wird die Betätigungseinrichtung 55 nicht mehr betätigt, strömt das Fluid zurück und der Ringkolben 14 führt einen Rückhub in der Hydraulikkammer 13 aus. Die Bremsscheibe 8 wird von dem Bremsbelag 9 gelöst und kann axial in ihre Ausgangsstellung zurückbewegt werden. Insbesondere wird der Bremsvorgang dadurch gestoppt.

Die Bremsscheibe 8 steht mit dem Ringkolben 14 in einer Wirkverbindung. Sie ist zwischen dem Bremsbelag 9 und dem Ringkolben 14 angeordnet. Wenn der Ringkolben 14 den Hub ausführt überträgt er die kinematische Energie als Bremskraft auf die Bremsscheibe 8. Dadurch wird die Bremsscheibe 8 axial in Richtung der Radfelge 2 verschoben, an den Bremsbelag 9 angelegt und/oder an diesen angepresst. Die zwischen der Bremsscheibe 8 und dem Bremsbelag 9 gebildete Reibung bremst das rotierende Rad ab. Vorteilhaft ist, dass der Bremsbelag 9 beim Bremsen eine Isolationseinrichtung bildet, die die Antriebseinrichtung 17 vor einwirkender Hitze schützt, die durch die Bremsreibung erzeugt wird.

Die Bremsvorrichtung 7 weist mehrere in Umfangsrichtung verteilte Federeinrichtungen 20 auf. Die Federeinrichtungen 20 sind als Rückstellfedern dazu ausgebildet, die Bremsscheibe 8 und somit den Ringkolben 14 mit einer Rückstellkraft zu beaufschlagen, wobei die Bremsscheibe 8 durch die Rückstellkraft axial in ihre Ausgangsstellung zurückbewegt wird. Die Federeinrichtungen 20 sind jeweils an dem Gehäuse 18 und in axialer Gegenrichtung an der Bremsscheibe 8 abgestützt.

Wie aus den Figuren 2 und 4 zu entnehmen, weist das Radmodul 1 ein Gehäuse 18 auf. Das Gehäuse 18 ist aus einem Kunststoffmaterial oder alternativ aus einer Aluminiumlegierung gebildet. Es ist in einer seitlichen Draufsicht z.B. gemäß der Figur 2 ringförmig ausgebildet und weist eine zentrale Aussparung für die Radachse 5 auf. Die Bremsvorrichtung 7, insbesondere die Hydraulikeinrichtung 12 ist in dem Gehäuse 18 aufgenommen. Hierzu ist die Befestigungsstruktur 19 mit dem Gehäuse 18 verbunden. Die Verbindung kann form- und/oder kraftschlüssig aber auch stoffschlüssig umgesetzt sein. Die Bremsscheibe 8 ist gemäß der Figur 4 ebenfalls zumindest teilweise in dem Gehäuse 18 aufgenommen.

Eine Außenseite des Gehäuses 18 ist eine Sichtseite, die die Bremsvorrichtung 7 und einen Großteil der Radfelge 2 nach außen verblendet. Somit ist die Bremsvorrichtung 7 unauffällig in dem Radmodul 1 integriert. Die Sichtseite kann optisch ansprechend designt werden, z.B. ist gemäß der Figur 2 eine Struktur in die Außenseite eingebracht.

### Bezugszeichenliste

- 1: Radmodul
- 2: Radfelge
- 3: Rad
- 4: Reifen
- 5: Radachse
- 6: Wälzeinrichtungen
- 7: Bremsvorrichtung
- 8: Bremsscheibe
- 9: Bremsbelag
- 10: Bremsbelagträger
- 11: Befestigungsmittel
- 12: Hydraulikeinrichtung
- 13: Hydraulikkammer
- 14: Ringkolben
- 15: Strömungskanal
- 16: Verdrehsicherung
- 17: Antriebseinrichtung
- 18: Gehäuse
- 19: Befestigungsstruktur
- 20: Federeinrichtung

- 50: Fahrzeug
- 51: Hinterrad
- 52: Fahrzeugrahmen
- 53: Radgabel
- 54: Lenker
- 55: Betätigungseinrichtung

## Patentansprüche

1. Radmodul (1) für ein Fahrzeug (50), insbesondere für einen Elektroroller oder Elektroscooter,
mit einer Radachse (5) und mit einem Rad (3), wobei das Rad (3) eine Radfelge (2) umfasst, wobei die Radfelge (2) auf der Radachse (5) drehbar gelagert ist,
mit einer Bremsvorrichtung (7) für das Rad (3), wobei die Bremsvorrichtung (7) einen Bremsbelag (9) und eine Bremsscheibe (8) zum Zusammenwirken mit dem Bremsbelag (9) umfasst,
wobei die Bremsscheibe (8) zum Abbremsen des Rades (3) axial bewegbar ist, **dadurch gekennzeichnet, dass** die Bremsvorrichtung (7) eine Hydraulikeinrichtung (12) mit einer in einer seitlichen Draufsicht ringförmigen Hydraulikkammer (13) und mit einem Ringkolben (14) zur Ausführung eines Hubs und eines Rückhubs in der der Hydraulikammer (13) umfasst und dass die Hydraulikeinrichtung (12) an der Radachse (5) befestigt ist und konzentrisch mit der Radfelge (2) angeordnet ist.

2. Radmodul (1) nach Anspruch 1, **dadurch gekennzeichnet, dass** die Bremsscheibe (8) zwischen dem Ringkolben (14) und dem Bremsbelag (9) angeordnet ist und durch den Hub des Ringkolbens (14) axial verschiebbar und an den Bremsbelag (9) anlegbar und/oder anpressbar ist.

3. Radmodul (1) nach einem der vorhergehenden Ansprüche, **dadurch gekennzeichnet, dass** die Bremsvorrichtung (7) mindestens eine Federeinrichtung (20) zur Erzeugung einer Rückstellkraft und zur Beaufschlagung der Bremsscheibe (8) mit der Rückstellkraft umfasst, sodass die Bremsscheibe (8) axial in ihre Ausgangsstellung zurückbewegbar ist.

4. Radmodul (1) nach einem der vorhergehenden Ansprüche, **dadurch gekennzeichnet, dass** der Bremsbelag (9) unmittelbar oder mittelbar an der Radfelge (2) angeordnet ist.

5. Radmodul (1) nach einem der vorhergehenden Ansprüche, **dadurch gekennzeichnet, dass** das Radmodul (1) einen Bremsbelagträger (10) zum Tragen des Bremsbelags (9) aufweist.

6. Radmodul (1) nach einem der vorhergehenden Ansprüche, **dadurch gekennzeichnet, dass** der Bremsbelag (9) eine thermische Isolationseinrichtung bildet, wobei die thermische Isolationseinrichtung das Rad (3) vor einer Abwärme der Bremsvorrichtung (7) schützt.

7. Fahrzeug (50) mit mindestens einem Radmodul (1) nach einem der vorhergehenden Ansprüche.

## Claims

1. A wheel module (1) for a vehicle (50), in particular for an electric scooter or e-scooter,
having a wheel axle (5) and a wheel (3), wherein the wheel (3) comprises a wheel rim (2), wherein the wheel rim (2) is rotatably mounted on the wheel axle (5),
having a braking device (7) for the wheel (3), wherein the braking device (7) comprises a brake lining (9) and a brake disc (8) for interacting with the brake lining (9),
wherein the brake disc (8) is axially movable for braking the wheel (3), **characterized in that** the braking device (7) comprises a hydraulic device (12) with a hydraulic chamber (13), which is annular in a lateral plan view, and with an annular piston (14) for executing a stroke and a return stroke in the hydraulic chamber (13), and that the hydraulic device (12) is fastened to the wheel axle (5) and is arranged concentrically with the wheel rim (2).

2. The wheel module (1) according to Claim 1, **characterized in that** the brake disc (8) is arranged between the annular piston (14) and the brake lining (9) and is axially displaceable via the stroke of the annular piston (14), and can be placed and/or pressed against the brake lining (9).

3. The wheel module (1) according to one of the preceding claims, **characterized in that** the braking device (7) comprises at least one spring device (20) for generating a restoring force and for applying the restoring force to the brake disc (8) so that the brake disc (8) can be moved axially back into its starting position.

4. The wheel module (1) according to one of the preceding claims, **characterized in that** the brake lining (9) is arranged directly or indirectly on the wheel rim (2).

5. The wheel module (1) according to one of the preceding claims, **characterized in that** the wheel module (1) has a brake lining carrier (10) for supporting the brake lining (9).

6. The wheel module (1) according to one of the preceding claims, **characterized in that** the brake lining (9) forms a thermal insulation device, wherein the thermal insulation device protects the wheel (3) from waste heat of the braking device (7).

7. A vehicle (50) having at least one wheel module (1) according to one of the preceding claims.

## Revendications

1. Module de roue (1) pour véhicule (50), en particulier pour scooter électrique ou trottinette électrique,
comportant un axe de roue (5) et une roue (3), la roue (3) comprenant une jante de roue (2), la jante de roue (2) étant montée rotative sur l'axe de roue (5),
comportant un dispositif de freinage (7) pour la roue (3), le dispositif de freinage (7) comprenant une plaquette de frein (9) et un disque de frein (8) destiné à coopérer avec la plaquette de frein (9),
le disque de frein (8) étant mobile axialement pour freiner la roue (3), **caractérisé en ce que** le dispositif de freinage (7) présente un appareil hydraulique (12) avec une chambre hydraulique (13) de forme annulaire en vue latérale de dessus et avec un piston annulaire (14) destiné à réaliser une course aller et une course retour dans la chambre hydraulique (13) et **en ce que** l'appareil hydraulique (12) est fixé à l'axe de roue (5) et est disposé de manière concentrique à la jante de roue (2).

2. Module de roue (1) selon la revendication 1, **caractérisé en ce que** le disque de frein (8) est disposé entre le piston annulaire (14) et la plaquette de frein (9) et peut être déplacé axialement par la course aller du piston annulaire (14) et placé et/ou pressé contre la plaquette de frein (9).

3. Module de roue (1) selon l'une des revendications précédentes, **caractérisé en ce que** le dispositif de freinage (7) comprend au moins un appareil à ressort (20) pour générer une force de rappel et pour appliquer la force de rappel au disque de frein (8), de telle sorte que le disque de frein (8) peut être reculé axialement dans sa position de départ.

4. Module de roue (1) selon l'une des revendications précédentes, **caractérisé en ce que** la plaquette de frein (9) est disposée directement ou indirectement sur la jante de roue (2).

5. Module de roue (1) selon l'une des revendications précédentes, **caractérisé en ce que** le module de roue (1) présente un support (10) de plaquette de frein pour supporter la plaquette de frein (9).

6. Module de roue (1) selon l'une des revendications précédentes, **caractérisé en ce que** la plaquette de frein (9) forme un appareil d'isolation thermique, l'appareil d'isolation thermique protégeant la roue (3) de la chaleur dégagée par le dispositif de freinage (7).

7. Véhicule (50) comportant au moins un module de roue (1) selon l'une des revendications précédentes.
